# EUROPEAN PATENT SPECIFICATION

(11) **EP 0 302 043 B1**
(45) Date of publication and mention of the grant of the patent: **16.06.1993**
(21) Application number: 88890137.8
(22) Date of filing: 06.06.1988
(51) Int. Cl.: G02B 6/12, G02B 6/10, G02B 6/26

(54) **Process of tapering waveguides**
Verfahren zum Verjüngen von Wellenleitern
Procédé de fuseler des guides d'ondes

(30) Priority: 28.07.1987 US 78589
(43) Date of publication of application: 01.02.1989
(73) Proprietor: POLAROID CORPORATION, Cambridge, Massachusetts 02139 (US)
(72) Inventor: Mahapatra, Amaresh, Acton Massachusetts 01720 (US)
(74) Representative: Holzer, Walter, Dipl.-Ing.

(56) References cited:
- EP-A- 0 193 248
- WO-A-86/06913
- US-A- 4 711 514
- JOURNAL OF APPLIED PHYSICS,vol. 60, no. 12, 1986, pp 4293-4296; K. SHIGIHARA et al.: "Modal field transforming fiber between dissimilar waveguides".

## Description

### Field of the Invention

This invention relates to channel waveguides useful at optical wavelengths.

### Background of the Invention

In optical waveguide systems, there is a need for a coupling channel waveguide whose width continuously varies from one dimension to another over a relatively short length of the waveguide. This need may arise, for example, when the waveguide is used to couple a single mode optical fiber whose core has one dimension to an optical waveguide whose channel width has a different dimension. To couple efficiently, the waveguide used for coupling should be relatively lossless and remain a single mode waveguide despite the change in its channel width between the two dimensions. The latter consideration requires that the index of refraction along the channel vary inversely with the change in its geometry. These factors pose problems.

In particular, if the desired change in channel width is achieved simply by forming, by the normal photolithographic techniques, a channel whose width tapers gradually between the two dimensions needed, the index of refraction of the channel guide tends to remain uniform along the length of the tapered region because the concentration of the impurity added to form the index of refraction change in the channel tends to be uniform along such length. As a consequence, because the width of the channel varies along such length while the index of refraction remains uniform along the length, the modal properties along the region of taper vary. What is needed to maintain the modal properties essentially constant along the length where the channel width varies is a compensation change in the index of refraction along such length.

The problem is especially critical with waveguides that use a large index of refraction change between the channel and its substrate to achieve tight confinement of energy in the channel. The large index change results in a large modal mismatch between the relatively narrow single mode channel waveguides useful in integrated circuit devices and the typically wider optical fibers that are often coupled to such channel waveguides.

### Summary of the Invention

In Journal of Applied Physics, 60, no.12, 1985, p.4293-4296, the general theory of tapering preformed fiber waveguides is disclosed by establishing a temperature gradient which non-uniformly diffuses the core dopant into the surrounding substrate fiber. In this disclosure it is not indicated how the temperature gradient can be technically achieved in a convenient and reproduceable manner, in particular with planar substrates.

The present invention is defined in claim 1 and is directed to a highly controllable process for forming a channel waveguide whose width and depth can be varied in any desired manner along its length, typically to taper in continuous fashion from a relatievely wide dimension to a relatively narrow dimension over a short length, and in which the index of refraction in the channel along such length varies in a manner to compensate for the change in geometry. As a result, the modal properties of the channel remain essentially uniform over the length and a single mode signal applied as an input at one end of the tapered channel length can pass through to the other end with little mode conversion and insignificant loss.

In this process, there is first prepared, by any one of the known techniques, a waveguide channel of uniform width and uniform concentration of the dopant or impurity used to effect the index of refraction change. The uniform width advantageously is chosen to match the narrower of the dimensions involved. Then the portion of the channel whose width and depth is to be changed is subjected to non-uniform heating along its length for a time and at a temperature such that there is effected along such length a prescribed non-uniform diffusion of the dopant or impurity. The heating tends to diffuse the impurity outwards from the channel at a rate determined by the temperature to increase its width and depth. The non-uniform heating is chosen to unalter the width of the channel at one end of the coupling region while widening it at the other end. Moreover, because the same amount of dopant or impurity will merely have been spread over a wider waveguide volume, the increase in volume will have been compensated for by a corresponding decrease in the index of refraction. Various ways are feasible for providing the desired non-uniform heating. The non-uniform heating is achieved by irradiating successive limited portions of the channel region involved with localized laser pulses, the number of pulses and/or the intensity of pulses applied to successive portions varying from one end of the region to the other end to provide a continuous change in width and depth of the channel. This technique is attractive because of the high degree of control possible, which permits reshaping the original channel both widthwise and depthwise.

### Detailed Description of the Drawings

The invention will be better understood from the following more detailed description taken with the accompanying drawings in which:
FIG. 1 shows schematically in perspective form laser apparatus for heating a channel waveguide non-uniformly in accordance with one embodiment of the invention;
FIG. 2 shows the channel waveguide after being treated in the apparatus of FIG. 1; and
FIG. 3 shows alternative apparatus for heating a channel waveguide non-uniformly.

### Detailed Description of the Invention

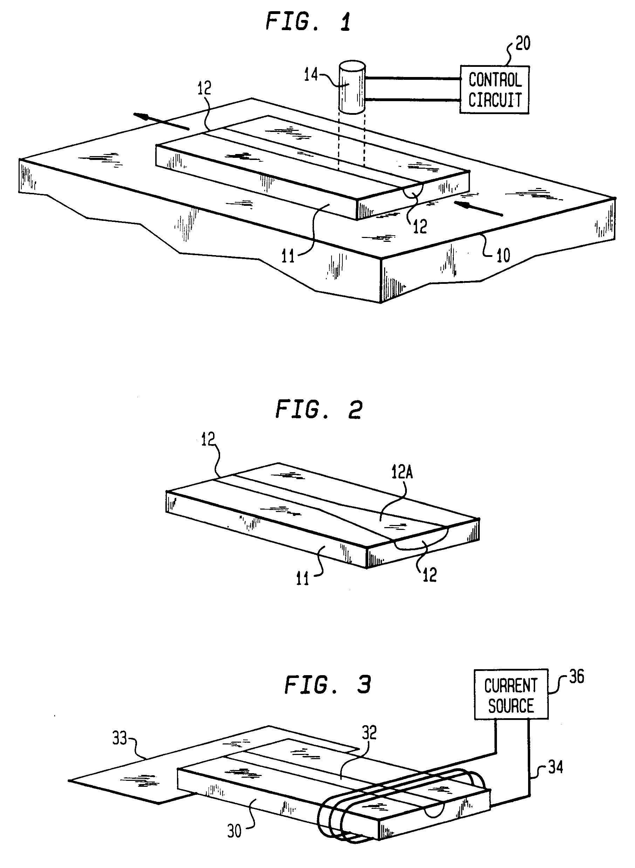

Referring now to FIG. 1, there is shown schematically a platform 10 which can be stepped a prescribed distance at a time in the direction indicated by the arrows and at a rate determined by a suitable control system (not shown) in the manner familiar to workers in the art of processing microelectronic devices. The control system permits the platform to dwell at each position a prescribed period of time that may be different at different positions. Typically, the desired dwell time at each position is stored in a program supplied to the control system before the process is begun so that it can proceed automatically.

Positioned on the platform to move with it is the workpiece, substrate 11 within which has previously been formed a channel waveguide 12 in any of the ways known for forming an optical channel waveguide. For example, the channel waveguide may have been formed by an ion exchange process in a silicate glass substrate such as soda lime. This would typically have been done after suitable masking to cover all its surface except the elongated narrow portion in which the channel is formed. Afterwards, the substrate is immersed for a suitable time, for example about 52 minutes, in molten silver nitrate at about 270°C to exchange sodium in the soda-lime glass for silver in the bath. Consequently, there is formed along the exposed portion of the substrate a narrow elongated channel that is doped with silver. The silver doping increases the index of refraction in the channel selectively above that of the undoped glass, whereby the channel serves as an optical waveguide. This process tends to result in an index of refraction change which is gradual. For a step index of refraction change, it is feasible to use an electric field-assisted ion exchange process in which the glass substrate is dipped in a silver nitrate electrolyte while the bottom surface of the glass substrate is covered with a metal electrode maintained at a negative potential with respect to the electrolyte. This process can be carried out at lower temperatures than the first described ion exchange process so that thermal diffusion effects are reduced and a sharper almost step gradient can be achieved in the silver concentration profile in the formed channel.

It is of course feasible to substitute for ions other than sodium in the glass and/or to use dopants other than silver for the substitution to form the waveguide, as is known to workers in the art.

Alternatively, the waveguide 12 could have been formed in a ferroelectric substrate such as lithium niobate using a proton exchange process.

A laser 14 coupled to a control circuit 20 is positioned over the platform such that successive portions of the channel 12 in substrate 11 pass under the laser so that the laser output beam is incident at a given time on a limited region of the channel. There is chosen for use a laser whose output wavelength and beam size is appropriate to the channel being heated. In particular, one choses a laser whose output wavelength is within the absorption band of the substrate. Optics may be included (not shown) to focus the output beam of the laser on the channel. The laser may be operated either in a continuous wave mode or in a pulsed mode. Accordingly, by appropriately programming the stepping of the platform, any desired dwell time of the laser beam on a particular portion of the channel may be obtained. In accordance with the invention, a desired taper in the width of the channel is achieved by appropriate variable heating of the channel by the laser beam. Typical applications would be to widen a channel region about two microns wide at one end to between five and six microns wide at the other end over a distance of between one and ten millimeters. It is usually desirable to keep the length of the taper short in the interest of compactness. However, too abrupt a change in width may lead to a waveguide which is extra lossy, especially to desirable single mode transmission therethrough. An advantageous rate of change in the width would be one which satisfies the criteria for an adiabatic change that are set forth in a paper entitled, "Dielectric Tapers with Curved Axis and No Loss" by E. A. J. Marcatili. IEEE Journal of Quantum Electronics VQE-21, 307 (1985).

It is a consequence of the thermal diffusion process involved in the heating technique described that as the outward diffusion of the dopant widens the channel, the concentration of the dopant in the widened channel is decreased, since effectively the same number of dopant ions are spread over a larger volume. It is known that the modal content of a channel waveguide is related to the product of the width of the channel and the index of refraction change, and that the latter is proportional to the dopant concentration in the channel. Accordingly, if the width of the channel is increased by the thermal diffusion but its dopant concentration is reduced by the same ratio, the modal content of the channel waveguide remains essentially unchanged.

Moreover, it is characteristic of the laser heating technique described that the heating can be largely localized near the top surface of the glass substrate whereby the desired widening and deepening of the channel can be achieved.

In FIG. 2, there is shown a typical result of the treatment described with reference to FIG. 1. The channel 12 in the glass substrate 10 has been modified to include the tapered region 12A which widens from its original width of typically 2 microns to an enlarged width typically 4.7 microns, over a length of about 5 millimeters. The original guide which acts as a single mode guide at a wavelength of .8 microns remains a single mode guide despite the change in channel width.

There are of course various other forms of non-uniform heating that can be used instead of that already described. For example, the arrangement shown in FIG. 1 could be modified to vary appropriately the intensity of the laser as successive portions of the channel moved past, either at a uniform rate or a non-uniform rate.

Alternatively, the localized heating could be provided by a heated filament, instead of a laser, past which was moved the channel.

Still another possible technique is depicted schematically in FIG. 3 in which a glass substrate 30, including a channel 32, is mounted to keep one end in a fixture that includes a support 33 maintained at one temperature for keeping that end of the glass substrate essentially at that temperature. Typically, the end of the substrate would be clamped to the support for a low thermal resistance connection. The other end of the glass substrate 30 is positioned in a hotter zone depicted by the heating coil 34, to which is supplied heating current from the current source 36. By keeping the two ends of the glass substrate at different temperatures, a desired monotonic temperature gradient can be established along the substrate to cause different widths of out diffusion of the dopant along the channel to achieve the desired taper in the channel width. The spacing between turns of the heating coil can be varied to help achieve a desired temperature profile along the channel even in the heating zone. Typically, the cold end may be kept at about 200°C and the hot end kept at about 300°C. A time of between fifteen and thirty minutes has been used to provide a widening of between two and four times of the hot end of the channel. This technique will tend also to result in a commensurate increase in the channel depth at the hot end. As previously mentioned, it is usually desirable to maintain the temperature at the cold end sufficiently low that little diffusion occurs at such end.

It should be apparent at this point that various other techniques are feasible for performing the desired non-uniform heating. These include pulling a narrow heating element along at a varying rate to keep successive portions of the substrate in the heating zone gradually shorter or gradually longer times.

Moreover, it should be apparent that the principles of the invention can be used with a variety of substrates so long as the dopant used to form the waveguide diffuses appropriately in the substrate at temperatures convenient to use and tolerable by the substrate.

In particular, the invention is similarly applicable to channel waveguides formed in crystals, such as lithium niobate or lithium tantalate, in which the channel is formed by proton exchange to be quite narrow for tight confinement of the optical energy.

Moreover, in some instances, it may be advantageous to include a number of parallel channel waveguides in a common substrate and to widen portions of each of the channels in a common non-uniform heating procedure of the kind described.

Additionally, it should be apparent that the localized controlled diffusion technique, for example, as described in connection with FIG. 1, can be used first to widen a channel and then to taper the widened channel back to the normal width so that any desired variation with length along the channel above the original width can be achieved.

Moreover, even though the inventive process is particularly suitable for use in making tapered structures for coupling single mode waveguides while preseving their single mode nature, it should be apparent that it also can be used for other applications where tapered waveguides would be useful such as for coupling multimode guides to reduce insensitivity to tolerance variations.

## Claims

1. A process of tapering the geometry of a channel waveguide having a predetermined geometry and dopant concentration and being formed in a substrate by doping the latter with refraction-index-changing ions, comprising the steps of:
selectively heating the channel (12) largely locally by laser (14) irradiation for thermally diffusing the dopant, thereby increasing the channel width and depth in the heated channel portion while proportionally decreasing the dopant concentration, thus keeping the modal content of the channel substantially constant, in order to achieve the desired taper (12A) in the geometry of the channel.

2. The process of claim 1 in which the providing of the substrate comprises providing a substrate (11) having a channel waveguide (12) of substantially uniform width.

3. The process of claim 2 in which the selectively heating comprises moving the channel (12) at a non-uniform rate relative to the laser source (14) whose output is focused on a limited longitudinal portion of the channel.

4. The process of claim 3 in which the non-uniform rate of moving changes to continuously vary the amount of exposure to the laser source (14) of successive longitudinal portions of the channel (12).

5. The process of claim 1 in which the substrate (11) is selected from the group comprising silicate glasses and ferroelectric materials.

6. The process of claim 1 in which the taper (12A) extends over a length of up to one centimeter.

## Patentansprüche

1. Verfahren zum Verjüngen der Geometrie eines Kanal-Wellenleiters mit einer vorgegebenen Geometrie und einer vorgegebenen Dotierungsdichte, der in einem Substrat durch Dotieren des letzteren mit brechungsindexändernden Ionen gebildet wird, mit den Schritten:
selektives Erwärmen des Kanales (12) weitgehend lokal mittels Strahlung von einem Laser (14), um den Dotierstoff thermisch zu diffundieren, wodurch die Kanalbreite und -tiefe in dem erwärmten Kanalabschnitt erhöht werden, während die Dotierungsdichte proportional verringert wird, wodurch der modale Gehalt des Kanales im Wesentlichen konstant gehalten wird, um die gewünschte Verjüngung (12A) in der Geometrie des Kanales zu erzielen.

2. Verfahren nach Anspruch 1, bei welchem das Bereitstellen des Substrates das Bereitstellen eines Substrates (11) mit einem Kanal-Wellenleiter (12) von im wesentlichen gleichförmiger Breite umfaßt.

3. Verfahren nach Anspruch 2, bei welchem das selektive Erwärmen das Bewegen des Kanales (12) mit einer ungleichförmigen Geschwindigkeit relativ zur Laserquelle (14) umfaßt, deren Ausgang auf einen begrenzten Längsabschnitt des Kanales fokussiert ist.

4. Verfahren nach Anspruch 3, bei welchem sich die ungleichförmige Bewegungsgeschwindigkeit kontinuierlich ändert, um das Ausmaß zu verändern, in dem aufeinanderfolgende Längsabschnitte des Kanales (12) der Laserquelle (14) exponiert werden.

5. Verfahren nach Anspruch 1, bei welchem das Substrat (11) aus der Gruppe bestehend aus Silikatgläsern und ferroelektrischen Materialien gewählt wird.

6. Verfahren nach Anspruch 1, bei welchem sich die Verjüngung (12A) über eine Länge von bis zu 1 cm erstreckt.

## Revendications

1. Procédé pour changer progressivement la géometrie d'un guide d'ondes en forme de canal, de géométrie et de concentration en dopant prédéterminées, formé dans un substrat par dopage de ce dernier avec des ions modifiant l'indice de réfraction, ce procédé comportant l'étape qui consiste à chauffer le canal (12) de façon sélective, importante et localisée, par irradiation laser (14) afin de faire diffuser thermiquement le dopant, augmentant ainsi la largeur et la profondeur du canal dans la partie du canal qui est chauffée, tout en diminuant proportionnellement la concentration en dopant, ce qui conserve sensiblement constant le nombre de modes dans le canal, afin d'obtenir le cône (12A) souhaité dans la géométrie du canal.

2. Procédé selon la revendication 1, dans lequel la préparation du substrat comprend la préparation d'un substrat (11) avec un guide d'ondes (12) en canal de largeur sensiblement uniforme.

3. Procédé selon la revendication 2, dans lequel le chauffage sélectif comprend le déplacement du canal (12), à une vitesse non uniforme, par rapport à la source laser (14) dont la sortie est focalisée sur une partie longitudinale limitée du canal.

4. Procédé selon la revendication 3, dans lequel la vitesse de déplacement non uniforme varie de manière à modifier continuellement le degré d'exposition à la source laser (14) des parties longitudinales successives du canal (12).

5. Procédé selon la revendication 1, dans lequel le substrat (11) est choisi parmi le groupe comprenant des verres de silicate et des matériaux ferroélectriques.

6. Procédé selon la revendication 1, dans lequel la partie conique (12A) s'étend sur une longueur atteignant 1cm.
